# EUROPEAN PATENT APPLICATION

(11) **EP 4 708 458 A1**
(43) Date of publication of application: **11.03.2026**
(21) Application number: 25200895.8
(22) Date of filing: 09.02.2023
(51) Int. Cl.: H01M 10/613, H01M 10/625, H01M 10/6567, H01M 50/119, H01M 50/124, H01M 50/145, H01M 50/24, H01M 50/249

(54) **BATTERY CELL, AND BATTERY MODULE COMPRISING THE SAME**

(30) Priority: 10.02.2022 KR 20220017379
(62) Divisional of application: 23753165.2
(71) Applicant: LG Energy Solution, Ltd., Seoul 07335 (KR)
(72) Inventor: JUNG, Min Yong, 34122 DAEJEON (KR); CHOI, Bum, 34122 DAEJEON (KR); KEUM, Jong Yoon, 34122 DAEJEON (KR); CHUNG, Jae Heon, 34122 DAEJEON (KR)
(74) Representative: Plasseraud IP

(57) **Abstract**

The present invention relates to a battery cell and a battery module comprising the same, and relates, particularly, to a direct water-cooling battery cell and a direct water-cooling battery module comprising the same. According to the present invention, the corrosion resistance of the battery cell can be improved by using a sacrificial metal having a higher metal ionization tendency than that of a battery cell case, and the heat of the battery cell can be cooled by using general cooling water for vehicles.

## Description

### Technical Field

The present invention is a battery cell and a battery module comprising the same, which relates, particularly, to a direct water-cooling battery cell and a direct water-cooling battery module comprising the same, and relates, in detail, to a direct water-cooling battery cell capable of improving corrosion resistance of the battery cell by using a sacrificial metal having a higher metal ionization tendency than that of a battery cell case, and a direct water-cooling battery module comprising the same.

This application claims the benefit of priority based on Korean Patent Application No. 10-2022-0017379 dated February 10, 2022, the disclosure of which is incorporated herein by reference in its entirety.

### Background Art

Batteries used in eco-friendly vehicles generate a large amount of heat because high power is required, and in order to improve battery performance and lifespan, it is very important to efficiently discharge heat generated from the battery, thereby preventing the batteries from overheating.

Conventionally, as a cooling system for dissipating heat from a battery, a direct air-cooling method, an indirect water-cooling method, or a direct water-cooling method is known.

The direct water-cooling method is a method in which battery cells are directly immersed in cooling water, and heat from the battery cells is directly discharged into the cooling water.

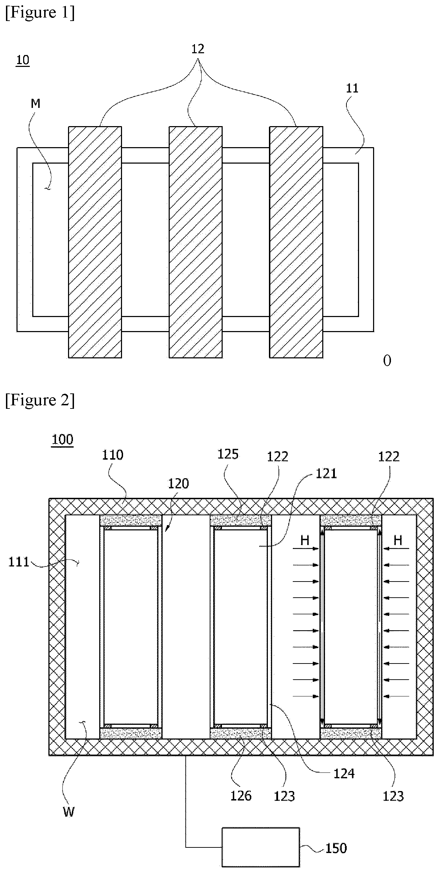

Figure 1 is a schematic configuration diagram of a conventional battery module (10).

Referring to Figure 1, a direct water-cooling type battery module (10) consists of a cell frame (11) and a plurality of battery cells (12). The plurality of battery cells (12) are spaced apart from each other in the cell frame (11). The cell frame (11) is provided so that cooling water can flow.

Generally, in the battery cell (12), an exterior case accommodating internal electrodes is made of nickel-plated iron. Accordingly, when the battery cell (12) is directly impregnated with cooling water, it is vulnerable to corrosion due to the material characteristics of the exterior case. In addition, there is a problem that the exterior case is polar and also has vulnerable electrical insulation.

In order to prevent corrosion of the battery cell (12) in the battery module (10) of the conventional direct water-cooling method, insulating oil or special cooling water (M) (e.g., 3M's NOVEC) is used.

However, the insulating oil has a problem of being vulnerable to fire, and the special cooling water such as 3M's NOVEC is excellent as a coolant for battery cells in that it is nonpolar and has corrosion resistance, but it is expensive, whereby there is a problem of increasing the manufacturing cost of the battery module.

Also, when an antirust liquid is applied to the exterior case of the battery cell in order to prevent corrosion of the battery cell as in the conventional art, a post-treatment process of covering the exterior case of the battery cell using a non-woven fabric is required to maintain the antirust liquid.

In addition, even if the antirust liquid is applied to the exterior case of the battery cell, the antirust agent flows down from the exterior case of the battery cell due to surface tension, whereby there is a problem that the antirust agent is not evenly applied to the exterior case.

### Disclosure

### Technical Problem

The present invention is intended to provide a direct water-cooling battery cell capable of improving corrosion resistance of a battery cell by using a sacrificial metal having a higher metal ionization tendency than that of a battery cell case, and a direct water-cooling battery module comprising the same.

### Technical Solution

A battery cell for direct water cooling according to one example of the present invention comprises an electrode assembly, a case accommodating the electrode assembly, a sacrificial metal part provided on an outer surface of the case, and formed of a material having a higher metal ionization tendency than that of the case, and a cell sheet including a metal layer, and provided to surround the sacrificial metal part and the case.

Also, the sacrificial metal part may comprise one or more selected from the group consisting of aluminum, magnesium, zinc, an aluminum alloy, a magnesium alloy, and a zinc alloy.

In addition, the sacrificial metal part may be provided on the upper surface and the lower surface of the case, respectively, and may be provided to expose at least partial regions of the upper surface and the lower surface to the outside.

Furthermore, the sacrificial metal part may be provided to have a ring shape along the circumferential direction of the upper surface and the lower surface.

Also, the sacrificial metal part may be provided to have a C-shape along the circumferential direction of the upper surface and the lower surface.

In addition, the cell sheet may comprise a pressure-sensitive adhesive layer provided on one surface of the metal layer and adhering to the case, and a waterproof layer provided on the other surface in a direction opposite to one surface of the metal layer.

Furthermore, the metal layer may be formed of a material having a higher metal ionization tendency than that of the case.

Also, the metal layer may be formed of the same material as the sacrificial metal part.

In addition, the cell sheet may surround the outer surface of the case so that one end of the cell sheet overlaps while covering the other end of the cell sheet along the circumferential direction of the case.

Furthermore, the sacrificial metal part may be laser-coupled to the outer surface of the case.

Also, the sacrificial metal part may be provided to surround a partial region of the case in a band shape.

In addition, the sacrificial metal part may be coupled along the circumference of the case at the central portion between the upper surface and the lower surface of the case.

Furthermore, the battery module for direct water cooling according to another example of the present invention comprises a plurality of direct water-cooling battery cells, a cell frame provided so that the plurality of battery cells is disposed apart from each other, and cooling water allows to flow between the plurality of battery cells, and a cooling water supply part for supplying cooling water into the cell frame.

Also, the battery module may comprise a waterproof layer provided inside the cell frame and provided to cover the side end of the upper surface and the side end of the lower surface of the case, respectively. In addition, the waterproof layer may comprise a waterproof adhesive or a potting resin.

Furthermore, the cooling water supply part may be provided to supply cooling water that is not insulated.

### Advantageous Effects

As described above, the direct water-cooling battery cell related to at least one example of the present invention, and the direct water-cooling battery module comprising the same have the following effects.

The corrosion resistance of the battery cell can be improved by using a sacrificial metal having a higher metal ionization tendency than that of the battery case. In addition, the heat of the battery cell can be cooled by using a low-cost general cooling water for vehicles that is not insulated.

Also, the corrosion resistance of the battery cell can be improved through the metal layer provided in the case, and the heat resistance, waterproofness, and insulation properties of the battery cell can be improved through the waterproof layer.

In addition, as the corrosion-resistant material (e.g., antirust agent) is contained in the pressure-sensitive adhesive, and the metal layer adhere to the case by the pressure-sensitive adhesive, the corrosion-resistant material can be evenly applied to the outer surface of the case.

Furthermore, as the overlapped interface of the metal layer is sealed, it is possible to prevent moisture and oxygen from being penetrated into the case through the overlapped interface of the metal layer when the battery cell is immersed in the cooling water at a high temperature for a long time.

### Description of Drawings

Figure 1 is a schematic configuration diagram of a conventional battery module.
Figure 2 is a configuration diagram of a direct water-cooling battery module according to a first example of the present invention.
Figure 3 schematically illustrates a perspective diagram of a battery cell according to a first example of the present invention.
Figure 4 schematically illustrates a cross section A-A of Figure 3.
Figures 5 and 6 are diagrams for explaining a state and a shape of a sacrificial metal part installed in a case according to a first example of the present invention.
Figure 7 is a configuration diagram of a direct water-cooling battery module according to a second example of the present invention.
Figure 8 is a diagram for explaining a state and a shape of a sacrificial metal part installed in a case according to a second example of the present invention.
Figure 9 schematically illustrates a perspective diagram of a battery cell according to a second example of the present invention.
Figures 10 and 11 schematically illustrate a cross section B-B of Figure 9.

### Mode for Invention

Hereinafter, a direct water-cooling battery cell according to one example of the present invention, and a direct water-cooling battery module comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

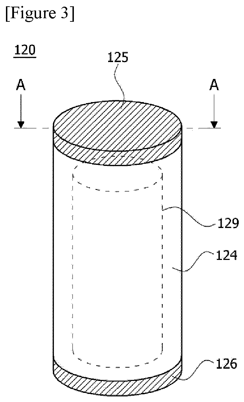

Figure 2 is a configuration diagram of a direct water-cooling battery module according to a first example of the present invention, and Figure 3 schematically illustrates a perspective diagram of a battery cell according to a first example of the present invention.

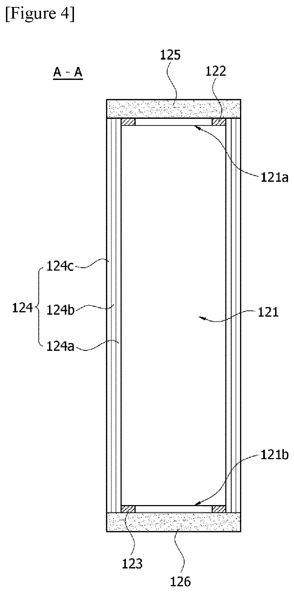

In addition, Figure 4 schematically illustrates a cross section A-A of Figure 3, and Figures 5 and 6 are diagrams for explaining a state and a shape of a sacrificial metal part installed in a case according to a first example of the present invention.

A direct water-cooling battery cell (120) related to one example of the present invention comprises an electrode assembly (129), a case (121) accommodating the electrode assembly (129), and a sacrificial metal part (122, 123) provided on an outer surface of the case (121), and formed of a material having a higher metal ionization tendency than that of the case. In addition, the battery cell (120) comprises a metal layer (124b), and comprises a cell sheet (124) provided to surround the sacrificial metal part (122, 123) and the case (121). At this instance, the cell sheet (124) is in contact with the sacrificial metal part (122, 123) in at least a partial region.

In addition, the electrode assembly (129) is accommodated in the case (121), and comprises a positive electrode, a negative electrode, and a separator disposed between the positive electrode and the negative electrode. The electrode and the separator may constitute an integrated electrode assembly. For example, the electrode assembly (129) may be a jelly-roll type electrode assembly in which sheet-type positive and negative electrodes are wound in a state where a separator is interposed therebetween, a stack type electrode assembly in which pluralities of positive and negative electrodes are sequentially stacked in a state where a separator is interposed therebetween, or a stack/folding type electrode assembly in which unit cells obtained by stacking positive and negative electrodes in predetermined units in a state where a separator is interposed therebetween are sequentially wound in a state where they are positioned on a separation film.

In addition, the case (121) serves to accommodate the electrode assembly (123), and to protect the battery cell (120) from external impacts. The case (121) may be cylindrical, pouch, or angular, and for example, the case may be cylindrical. In particular, the electrode assembly may be a rolled jelly-roll type electrode assembly, the case may be a cylindrical case, and the direct water-cooling battery cell (120) may be a cylindrical battery cell.

As shown in Figure 2, the direct water-cooling battery module (100) according to the present example comprises a plurality of direct water-cooling battery cells (120), a cell frame (110) provided so that the plurality of battery cells (120) is disposed apart from each other, and cooling water (W) allows to flow between the plurality of battery cells (120), and a cooling water supply part (150) for supplying cooling water into the cell frame (110).

The cell frame (110) has a predetermined space part (111) therein, and is provided in a structure in which cooling water can flow within the space part. The cooling water (W) may be supplied to the inner space part (111) of the cell frame (110), and then discharged to the outside of the cell frame (110), and to this end, the battery module (100) may comprise a cooling water discharge part for discharging the cooling water (W) to the outside of the cell frame (110). The cooling water supply part (150) may comprise a cooling water storage tank and a pump. In addition, the cooling water supply part (150) may be provided to supply cooling water (W) that is not insulated. The general cooling water (W) may be cooling water generally used in vehicles.

The direct water-cooling battery cell (120) comprises a case (121), a sacrificial metal part (122, 123), and a cell sheet (124). The cell sheet (124) comprises a pressure-sensitive adhesive layer (124a), a metal layer (124b), and a waterproof layer (124c).

Also, the case (121) may be formed of a metal material, and the surface of the case may be nickel-plated. That is, a nickel-plated layer may be provided on the surface of the case (121).

In addition, the sacrificial metal part (122, 123) may be formed of a material having a higher metal ionization reaction than that of the case (121). The sacrificial metal part (122, 123) may comprise one or more selected from the group consisting of aluminum, magnesium, zinc, an aluminum alloy, a magnesium alloy, and a zinc alloy.

Referring to Figure 4, the sacrificial metal part (122, 123) may be provided on the outer surface of the case (121). The sacrificial metal part (122, 123) may be provided on the upper surface (121a) and the lower surface (121b) of the case (121), respectively. In addition, the sacrificial metal part (122, 123) may be provided to expose at least partial regions of the upper surface and the lower surface to the outside. Each region of the upper surface and the lower surface exposed to the outside may be connected to the bus bar.

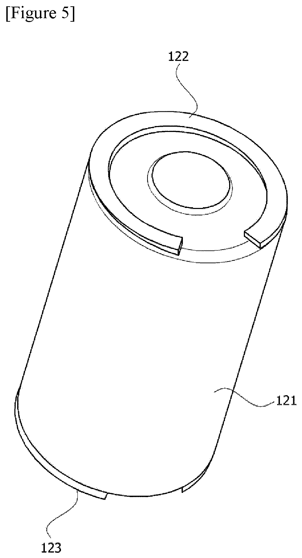

Referring to Figure 5, the sacrificial metal part (122, 123) may be provided to have a C-shape (or horseshoe shape) along the circumferential direction of the upper surface and the lower surface.

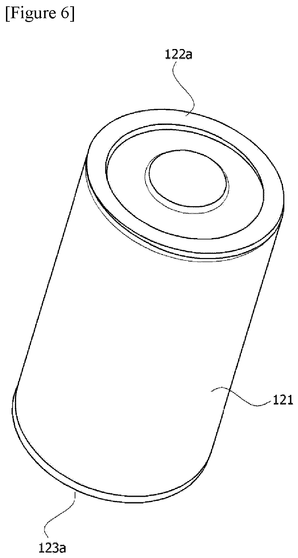

Referring to Figure 6, as another example, the sacrificial metal part (122a, 123a) may be provided to have a ring shape along the circumferential direction of the upper surface and the lower surface of the case (121).

Referring to Figure 2, when the direct water-cooling battery cell (120) is immersed in the cooling water (W), the moisture (H) of the cooling water (W) is subjected to ionization reaction with the sacrificial metal part (122, 123) due to the difference in metal ionization reaction between the case (121) and the sacrificial metal part (122, 123), and as a result, the metal ionization reaction of the case (121) is suppressed, whereby the direct water-cooling battery cell (120) can prevent corrosion of the case (121).

Referring to Figures 3 and 4, the cell sheet (124) is attached thereto to surround the outer surface of the case (121). For example, the cell sheet (124) is attached to the side surface connecting the upper surface (121a) and the lower surface (121b) of the case (121).

The cell sheet (124) may comprise a pressure-sensitive adhesive layer (124a) provided on one surface of the metal layer (124b) and adhering to the case, and a waterproof layer (124c) provided on the other surface in a direction opposite to one surface of the metal layer (124b).

Referring to Figure 4, the cell sheet (124) is integrally formed by a pressure-sensitive adhesive layer (124a), a metal layer (124b), and a waterproof layer (124c).

In addition, the cell sheet (124) surrounds the outer surface of the case (121) so that one end of the cell sheet (124) overlaps while covering the other end of the cell sheet (124) along the circumferential direction of the side surface of the case (121).

In order to prevent penetration of oxygen and moisture, the metal layer (124b) may have a thickness of 20µm or more.

The metal layer (124b) may be formed of a material having a higher metal ionization reaction than that of the case (121). As one example, the metal layer (124b) may be formed of an aluminum material. In addition, the metal layer (124b) may also be formed of the same material as the sacrificial metal part (122, 123).

When the direct water-cooling battery cell (120) is immersed in the cooling water (W), the moisture (H) penetrating the metal layer (124b) may be transferred to the sacrificial metal part (122, 123) through the metal layer (124b). The reason is because the metal ionization reaction to moisture in the sacrificial metal part (122, 123) is greater than the metal ionization reaction to moisture in the case (121). Accordingly, the corrosion resistance of the case (121) can be improved.

The pressure-sensitive adhesive layer (124a) is a portion provided on one surface of the metal layer (124b) to adhere to the case (121). The pressure-sensitive adhesive layer (124a) is provided by applying a pressure-sensitive adhesive (PSA) to one surface of the metal layer (124b).

The pressure-sensitive adhesive may comprise a corrosion-resistant material, where the corrosion-resistant material may be an antirust agent in which a substance such as a phosphate, a silicate, an organic acid salt, or a rubber grease is included.

In general, when only the antirust agent is applied to the case (121), the antirust agent flows down from the case (121) due to surface tension. On the contrary, in the present invention, the cell sheet (124) is attached to the case (121) by the pressure-sensitive adhesive layer (124a), so that it is possible to prevent a corrosion-resistant material (e.g., antirust agent) from flowing down from the case (121).

As the corrosion-resistant material (e.g., antirust agent) is contained in the pressure-sensitive adhesive layer (124a) and the cell sheet (124) is attached to the case (121) by the pressure-sensitive adhesive, it is possible to have an effect that the corrosion-resistant material is evenly applied to the outer surface of the case (121).

The waterproof layer (124c) is a waterproof sheet provided on the other surface of the metal layer (124b) to waterproof the metal layer (124b). The waterproof layer (124c) is a sheet having heat resistance, insulation properties, and moisture resistance, where a casting polypropylene (CPP) sheet may be used as the waterproof layer (124c).

While one end of the cell sheet (124) overlaps the other end of the cell sheet (124), the overlapped region of the cell sheet (124) is stepped. The stepped interface of the cell sheet (124) is sealed by a sealing material. The sealing material may be a material containing a resin, a plasticizer, an antioxidant, and a wax.

Alternatively, the cell sheet (124) may be tightly coupled to the metal layer (124b), while one end of the waterproof layer (124c) covers the other end of the waterproof layer (124c) and is thermally compressed at the overlapped interface.

Therefore, when the battery cell is immersed in cooling water at a high temperature for a long time, the present invention can prevent moisture and oxygen from penetrating into the case (121) through the overlapped interface of the cell sheet (124).

Meanwhile, the battery module (100) may comprise a waterproof layer (125, 126) provided inside the cell frame (110), and provided to cover the upper surface (121a) side end and the lower surface (121b) side end of the case (121), respectively. The waterproof layer (125, 126) prevent moisture from permeating into the case (121). The upper waterproof layer (125) may be provided at the upper end of the case (121), and the lower waterproof layer (126) may be provided at the lower end of the case (121). Referring to Figures 3 and 4, the waterproof layer (125, 126) may be provided to surround the sacrificial metal part (122, 123). That is, the sacrificial metal part (122, 123) inside the cell frame (110) do not contact the cooling water (W) by the waterproof layer (125, 126). In addition, the upper surface (121a) side and the lower surface (121b) side of the battery cell (120) may be fixed to the inner surface of the cell frame (110) through the waterproof layers (125, 126), respectively.

The waterproof layer (125, 126) may comprise a waterproof adhesive or a potting resin, and the potting resin may be any one of a silicone-based resin, a urethane-based resin, and an epoxy-based resin.

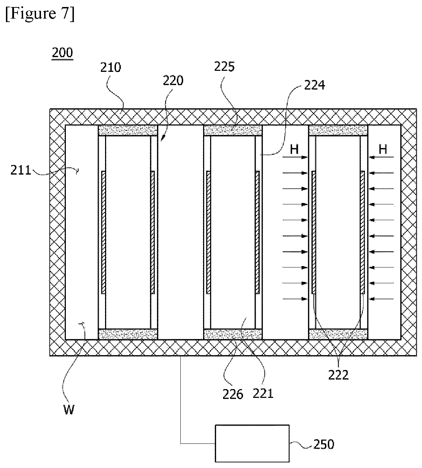

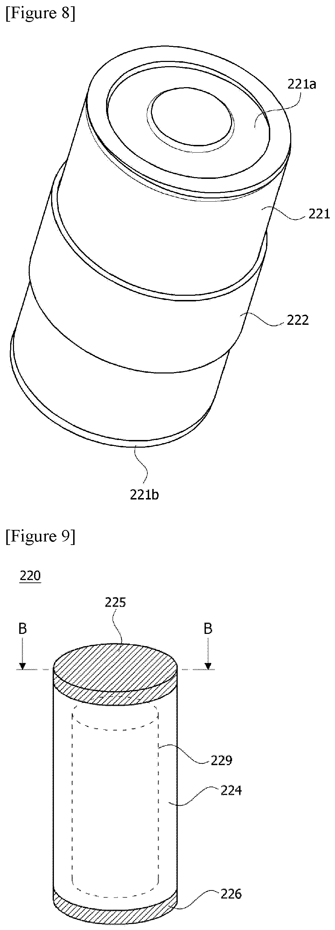

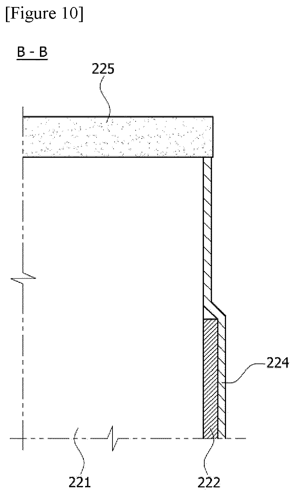

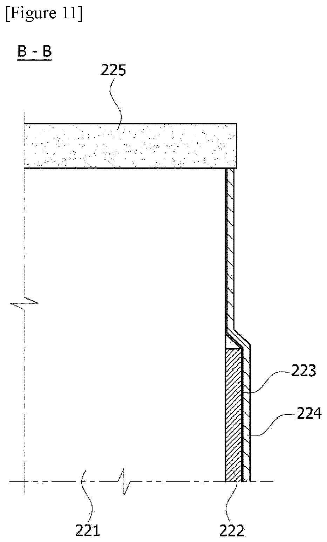

Figure 7 is a configuration diagram of a direct water-cooling battery module according to a second example of the present invention, Figure 8 is a diagram for explaining a state and a shape of a sacrificial metal part installed in a case according to a second example of the present invention, Figure 9 schematically illustrates a perspective diagram of a battery cell according to a second example of the present invention, and Figures 10 and 11 schematically illustrate a cross section B-B of Figure 9.

Referring to Figure 7, the direct water-cooling battery module (200) according to the present example comprises a plurality of direct water-cooling battery cells (220), a cell frame (210) provided so that the plurality of battery cells (220) is disposed apart from each other, and cooling water (W) allows to flow between the plurality of battery cells (220), and a cooling water supply part (250) for supplying the cooling water (W) to the inner space part (211) of the cell frame (210).

In the direct water-cooling battery module (200) according to the present example, the cell frame (210) and the cooling water supply part (250) are the same as those of the first example, so that descriptions thereof will be omitted.

Also, the direct water-cooling battery cell (220) according to the present example comprises an electrode assembly (229), a case (221) accommodating the electrode assembly (229), a sacrificial metal part (222) provided on the outer surface of the case (221), a corrosion-resistant sheet (223), and a waterproof sheet (224). In addition, the battery module (200) comprises an upper waterproof layer (225) and a lower waterproof layer (226).

Since the case (221), the upper waterproof layer (225), and the lower waterproof layer (226) are the same as those of the first example, descriptions thereof will be omitted in the present example.

In the direct water-cooling battery cell (220) according to the present example, the installation position of the sacrificial metal part (222) is different from that of the first example, and hereinafter, the sacrificial metal part (222) will be mainly described.

The sacrificial metal part (222) may be formed of a material having a higher metal ionization reaction than that of the case (221).

Referring to Figure 8, the sacrificial metal part (222) may be provided to surround a partial region of the case (221) in a band shape. In addition, the sacrificial metal part (222) may be coupled along the circumference of the case (221) at the central portion between the upper surface (221a) and the lower surface (221b) of the case (221). The sacrificial metal part (222) is coupled to the case (221) by a laser welding method.

Referring to Figures 9 and 10, the waterproof sheet (224) surrounds the sacrificial metal part (222). The waterproof sheet (224) is tightly coupled to the outer surface of the case (221) while being subjected to heat-shrinkage, whereby it is possible to prevent moisture from penetrating into the case.

The waterproof sheet (224) may be formed of a heat-shrinkable polymer material. The heat-shrinkable polymer material may comprise one or more selected from the group consisting of polyvinyl chloride (PVC), polypropylene (PP), and polyethylene terephthalate (PET).

Referring to Figure 11, in order to improve the corrosion resistance of the direct water-cooling battery module (200), after the case (221) is subjected to corrosion resistance treatment using the corrosion-resistant sheet (223) before coupling the waterproof sheet (224) to the case (221), the waterproof sheet (224) may also be coupled thereto.

Here, the corrosion-resistant sheet (223) surrounds the outer surface of the case (221) in which the sacrificial metal part (222) is included. Thereafter, the waterproof sheet (224) surrounds the corrosion resistant sheet (223) and is tightly coupled to the outer surface of the case (221) while being subjected to heat shrinkage.

The corrosion resistant sheet (223) has a material that a corrosion-resistant material is evenly absorbed. For example, as the corrosion-resistant sheet (223), a material that a corrosion-resistant material is evenly absorbed, for example, a cloth structure such as non-woven fabrics or cotton fabrics, can be used.

The corrosion-resistant sheet (223) may be bonded to the case (221), as a sheet adhesive is applied in a melted state by a hot melting method and then cooled. Here, an acrylic adhesive may be used as the sheet adhesive.

As the corrosion-resistant material (e.g., antirust agent) contacts the case (221) in a state where it is evenly absorbed over the entire area of the corrosion-resistant sheet (223), it is possible to have the effect of evenly applying the corrosion-resistant material to the outer surface of the case (221).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the direct water-cooling battery cell related to at least one example of the present invention, and the direct water-cooling battery module comprising the same, the corrosion resistance of the battery cell can be improved by using a sacrificial metal having a higher metal ionization tendency than that of the battery case.

### Items

### [Item 1]

A battery cell comprising:
an electrode assembly;
a case accommodating the electrode assembly;
a sacrificial metal part provided on an outer surface of the case, and formed of a material having a higher metal ionization tendency than that of the case; and
a cell sheet including a metal layer, and provided to surround the sacrificial metal part and the case.

### [Item 2]

The battery cell according to item **1,** wherein
the sacrificial metal part comprises one or more selected from the group consisting of aluminum, magnesium, zinc, an aluminum alloy, a magnesium alloy, and a zinc alloy.

### [Item 3]

The battery cell according to item 1, wherein
the sacrificial metal part is provided on the upper surface and the lower surface of the case, respectively, and is provided to expose at least partial regions of the upper surface and the lower surface to the outside.

### [Item 4]

The battery cell according to item 3, wherein
the sacrificial metal part is provided to have a ring shape along the circumferential direction of the upper surface and the lower surface.

### [Item 5]

The battery cell according to item 3, wherein
the sacrificial metal part is provided to have a C-shape along the circumferential direction of the upper surface and the lower surface.

### [Item 6]

The battery cell according to item 1, wherein the cell sheet comprises
a pressure-sensitive adhesive layer provided on one surface of the metal layer and adhering to the case, and
a waterproof layer provided on the other surface in a direction opposite to one surface of the metal layer.

### [Item 7]

The battery cell according to item 1, wherein
the metal layer is formed of a material having a higher metal ionization tendency than that of the case.

### [Item 8]

The battery cell according to item 7, wherein
the metal layer is formed of the same material as the sacrificial metal part.

### [Item 9]

The battery cell according to item 1, wherein
the cell sheet surrounds the outer surface of the case so that one end of the cell sheet overlaps while covering the other end of the cell sheet along the circumferential direction of the case.

### [Item 10]

The battery cell according to item 1, wherein
the sacrificial metal part is laser-coupled to the outer surface of the case.

### [Item 11]

The battery cell according to item 1, wherein
the sacrificial metal part surrounds a partial region of the case in a band shape.

### [Item 12]

The battery cell according to item 11, wherein
the sacrificial metal part is coupled along the circumference of the case at the central portion between the upper surface and the lower surface of the case.

### [Item 13]

A battery module comprising:
a plurality of battery cells according to item 1;
a cell frame provided so that the plurality of battery cells is disposed apart from each other, and cooling water allows to flow between the plurality of battery cells; and
a cooling water supply part for supplying cooling water into the cell frame.

### [Item 14]

The battery module according to item 13, wherein
the battery module comprises a waterproof layer provided inside the cell frame and provided to cover the side end of the upper surface and the side end of the lower surface of the case, respectively, where
the waterproof layer comprises a waterproof adhesive or a potting resin.

### [Item 15]

The battery module according to item 14, wherein
the cooling water supply part is provided to supply cooling water that is not insulated.

## Claims

1. A battery cell (120) comprising:
an electrode assembly (129);
a case (121) accommodating the electrode assembly (129);
a sacrificial metal part (122, 123) provided on the case (121), and formed of a material having a higher metal ionization tendency than that of the case (121); and
a cell sheet (124) including a metal layer (124b), and the cell sheet (124) is in contact with the sacrificial metal part (122, 123) in at least a partial region and surrounds the case (121),
wherein the metal layer (124b) is formed of a material having a higher metal ionization tendency than that of the case (121).

2. The battery cell (120) according to claim 1, wherein
the sacrificial metal part (122, 123) comprises one or more selected from the group consisting of aluminum, magnesium, zinc, an aluminum alloy, a magnesium alloy, and a zinc alloy.

3. The battery cell (120) according to claim 1, wherein
the sacrificial metal part (122, 123) is provided on an upper surface and a lower surface of the case (121), respectively, and is provided to expose at least partial regions of the upper surface and the lower surface to the outside.

4. The battery cell (120) according to claim 3, wherein
the sacrificial metal part (122, 123) is provided to have a ring shape along a circumferential direction of the upper surface and the lower surface.

5. The battery cell according to claim 3, wherein
the sacrificial metal part (122, 123) is provided to have a C-shape along a circumferential direction of the upper surface and the lower surface.

6. The battery cell (120) according to claim 1, wherein the cell sheet (124) comprises
a pressure-sensitive adhesive layer (124a) provided on one surface of the metal layer (124b) and adhering to the case (121), the pressure-sensitive adhesive layer (124a) comprising a corrosion-resistant material, and
a waterproof layer (124c) provided on the other surface in a direction opposite to one surface of the metal layer (124b).

7. The battery cell (120) according to claim 1, wherein
the metal layer (124b) is formed of the same material as the sacrificial metal part (122, 123).

8. The battery cell (120) according to claim 1, wherein
the cell sheet (124) surrounds the outer surface of the case (121) so that one end of the cell sheet (124) overlaps while covering an other end of the cell sheet (124) along a circumferential direction of the case (121).

9. The battery cell (120) according to claim 1, wherein
the sacrificial metal part (122, 123) is laser-coupled to the outer surface of the case (121).

10. The battery cell (120) according to claim 1, wherein
the sacrificial metal part (122, 123) surrounds a partial region of the case (121) in a band shape.

11. The battery cell (120) according to claim 10, wherein
the sacrificial metal part (122, 123) is coupled along a circumference of the case (121) at the central portion between an upper surface and a lower surface of the case (121).

12. A battery module (100) comprising:
a plurality of battery cells (120) according to claim 1;
a cell frame (110) provided so that the plurality of battery cells (120) is disposed apart from each other, and cooling water allows to flow between the plurality of battery cells (120); and
a cooling water supply part (150) for supplying cooling water into the cell frame (110).

13. The battery module (100) according to claim 12, wherein
the battery module (100) comprises a waterproof layer provided inside the cell frame (110) and provided to cover a side end of the upper surface and a side end of the lower surface of the case (121), respectively, where
the waterproof layer (125, 126) comprises a waterproof adhesive or a potting resin.

14. The battery module (100) according to claim 13, wherein
the cooling water supply part (150) is provided to supply cooling water that is not insulated.
